# DEMANDE DE BREVET EUROPEEN

(11) **EP 1 843 078 A1**
(43) Date de publication de la demande: **10.10.2007**
(21) Numéro de dépôt: 07290380.0
(22) Date de dépôt: 30.03.2007
(51) Int. Cl.: F17C 13/02, G01F 23/62

(54) **Bouteille à gaz à dispositif d'alerte**

(30) Priorité: 07.04.2006 FR 0603087
(71) Demandeur: Compagnie des Gaz de Pétrole Primagaz, 75017 Paris (FR)
(72) Inventeur: Bouvier, Daniel, 75011 Paris (FR)
(74) Mandataire: Eidelsberg, Victor Albert

(57) **Abrégé**

Cette bouteille à gaz de pétrole liquéfié comprend un flotteur (2) dont le mouvement déplace un aimant (4) qui défile devant un interrupteur (5) à lame souple monté dans un circuit électrique ayant un dispositif (7) d'alerte.

## Description

La présente invention se rapporte aux bouteilles à gaz et notamment aux bouteilles à gaz de pétrole liquéfié.

Il est connu d'équiper les bouteilles de GPL d'un flotteur transmettant la hauteur du liquide et par voie de conséquence la quantité de gaz à un indicateur : la transmission se fait par couplage magnétique entre deux aimants à travers le corps du robinet - l'aimant entrant est commandé par le flotteur, l'aimant mené est relié à un indicateur, index, cadran gradué, etc...

Une telle disposition a un inconvénient majeur : les bouteilles de GPL sont situées généralement dans des endroits où la visibilité du robinet est faible voire nulle.

En effet, très souvent les bouteilles sont placées sous des plans de travail, des tablettes, dans des armoires voire même dans des cuisinières (cuisinières à logement de bouteille incorporé), la visibilité du robinet est donc très difficile du fait de l'absence d'éclairement, voire impossible du fait des obstacles.

L'utilité d'un indicateur de niveau est donc sérieusement remise en cause, car il faut le consulter spécialement.

Au EP-A- 228823, on décrit une cuve à propane pour ballon de voyageurs comprenant un flotteur relié à un aimant de manière à ce que son déplacement, en fonction du niveau du liquide dans la cuve, déplace l'aimant. L'aimant défile devant un interrupteur à effet magnétique, normalement ouvert, monté dans un circuit électrique ayant un dispositif d'alerte auditif.

Au US-A-5 831 536, on décrit un système pour prévenir le débordement d'une cuve dans un bateau et non pour prévenir que la cuve sera bientôt vide. Un flotteur déplace un aimant qui défile devant un interrupteur à effet magnétique normalement ouvert. Cet interrupteur est monté à l'intérieur de la cuve.

La présente invention propose non une cuve industrielle sujette à débordement? mais une bouteille à usage domestique qui se vide sans que l'utilisateur s'en aperçoive.

L'invention vise à empêcher que le moyen qui sert à prévenir l'utilisateur soit endommagé et à permettre à l'utilisateur d'utiliser un seul et même moyen successivement pour plusieurs bouteilles.

L'invention est définie à la revendication 1.

L'élément peut être un corps de valve ou de robinet. L'élément peut être aussi un doigt de gant.

Lorsque le niveau du gaz s'est abaissé dans la bouteille au point que l'on peut considérer que celle-ci doit être retournée à l'usine de remplissage, l'utilisateur retire le boîtier qui comporte l'interrupteur à effet magnétique tel que l'interrupteur à lame souple, relativement fragile et l'adapte à une autre bouteille pleine. La bouteille vide qui est soumise lors du stockage et du remplissage en usine à des conditions très dures, ne comporte plus l'interrupteur fragile qui se trouve ainsi préservé. En outre, un même boîtier peut servir sur plusieurs bouteilles successives.

Un interrupteur permet de mettre le buzzer hors circuit, cet interrupteur étant commandé par le contact de l'avertisseur avec le robinet de gaz (l'avertisseur étant contenu dans un boîtier amovible) ou par une manoeuvre manuelle. Il est également possible de mettre en place un circuit ne faisant fonctionner le buzzer que pendant une période donnée et à des intervalles espacés - par exemple 1 minute toutes les heures.

Suivant un autre mode de réalisation, le dispositif d'alerte comprend un émetteur radio qui envoie un signal d'alerte à un récepteur radio, lequel émet l'avertissement d'alerte.

Aux dessins annexés, donnés uniquement à titre d'exemple:
la figure 1 est une vue en coupe partielle d'une bouteille suivant l'invention,
la figure 2 représente une variante, et
la figure 3 illustre le circuit électrique.

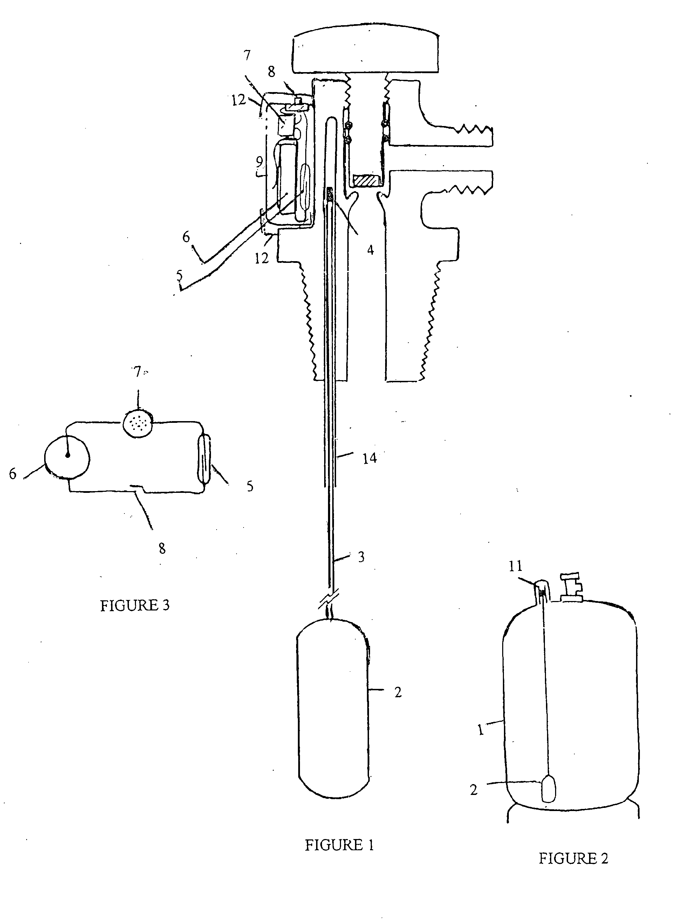

Les bouteilles à gaz à usage domestique représentées aux figures 1 et 2 comprennent un corps 1, dans lequel est placé un flotteur 2. le flotteur 2 suit le déplacement du niveau du liquide dans le corps 1. Par une tringlerie 3 de renvoi, le flotteur 2 déplace un aimant 4. L'aimant 4 défile devant un interrupteur 5 à lame souple, qui est monté dans un circuit électrique comprenant une pile 6, un buzzer 7 et un interrupteur 8 manuel. L'ensemble des éléments 5 à 8 est enfermé dans un boîtier 9.

A la figure 1, l'aimant se déplace dans une tige guide 14 ménagée dans le corps de valve 10 amagnétique et étanche de la bouteille.

A la figure 2, l'élément amagnétique dans lequel se déplace l'aimant est un doigt de gant 11.

Le corps 10 de valve comprend des crochets 12 qui retiennent le boîtier 9 avec possibilité de le décrocher et donc de le mettre sur une autre bouteille. Lorsque le boîtier 9 est éloigné du corps 10 de valve, l'interrupteur 5 à lame souple s'éloigne obligatoirement de l'aimant 4 quelle que soit la position de celui-ci. Le circuit électrique comportant le dispositif 7 d'alerte s'ouvre.

## Revendications

1. Bouteille à gaz à usage domestique, notamment à gaz de pétrole liquéfié, comprenant un flotteur (2) relié à un aimant (4) de manière à ce que son déplacement, en fonction du niveau du liquide dans la bouteille, déplace l'aimant (4), qui défile devant un interrupteur (5) à effet magnétique normalement ouvert, tel qu'un interrupteur à lame souple ou à effet Hall, monté dans un circuit électrique ayant un dispositif (7) d'alerte et logé dans un boîtier (9), **caractérisée en ce que** la bouteille comporte un élément (10, 11) amagnétique et étanche dans lequel se déplace l'aimant (4) et il est prévu des moyens (12) de fixation amovible du boîtier (9) à l'élément (10) tels qu'ils permettent à un utilisateur de la bouteille de retirer le boîtier (9) de l'élément (10) et de l'adapter à une autre bouteille.

2. Bouteille suivant la revendication 1, **caractérisée en ce que** le boîtier (9) est accroché à l'élément (10).

3. Bouteille suivant la revendication 1 ou 2, **caractérisée en ce que** l'élément est un corps (10) de valve.

4. Bouteille suivant la revendication 1 ou 2, **caractérisée en ce que** l'élément est un doigt (11) de gant.

5. Bouteille suivant l'une des revendications précédentes, **caractérisée en ce que** le circuit électrique comporte un interrupteur (8) manuel.

## Revendications modifiées

### Revendications modifiées conformément à la règle 86(2) CBE.

**1.** Bouteille à gaz à usage domestique, notamment à gaz de pétrole liquéfié, comprenant un flotteur (2) relié à un aimant (4) de manière à ce que son déplacement, en fonction du niveau du liquide dans la bouteille, déplace l'aimant (4), qui défile devant un interrupteur (5) à effet magnétique normalement ouvert, tel qu'un interrupteur à lame souple ou à effet Hall, logé dans un boîtier (9) et monté dans un circuit électrique ayant un dispositif (7) d'alerte, la bouteille comportant un élément (10, 11) amagnétique et étanche dans lequel se déplace l'aimant (4) et il est prévu des moyens (12) de fixation amovible du boîtier (9) à l'élément (10) **caractérisé en ce qu'**une pile (6) d'alimentation du circuit électrique est logée dans le boîtier (9) et le dispositif (7) d'alerte est logé dans le boîtier (9).

**2.** Bouteille **caractérisée en ce que** les moyens (12) de fixation sont tels qu'ils permettent à un utilisateur de la bouteille de retirer le boîtier (9) de l'élément (10) et l'adaptent en la même position à une autre bouteille identique.

**3.** Bouteille suivant la revendication 1 ou 2, **caractérisée en ce que** le boîtier (9) est accroché à l'élément (10).

**4.** Bouteille suivant la revendication 1, 2 ou 3, **caractérisée en ce que** l'élément est un corps (10) de valve.

**5.** Bouteille suivant la revendication 1, 2 ou 3, **caractérisée en ce que** l'élément est un doigt (11) de gant.

**6.** Bouteille suivant l'une des revendications précédentes, **caractérisée en ce que** le circuit électrique comporte un interrupteur (8) manuel.
